# EUROPÄISCHE PATENTSCHRIFT

(11) **EP 4 077 023 B1**
(45) Veröffentlichungstag und Bekanntmachung des Hinweises auf die Patenterteilung: **07.10.2026**
(21) Anmeldenummer: 20821123.5
(22) Anmeldetag: 02.12.2020
(51) Int. Cl.: B60L 5/00, B60L 15/28, B60L 50/40, B60L 53/30, H02J 7/34

(54) **VERFAHREN ZUM BETREIBEN EINES ELEKTRISCHEN FAHRZEUGES UND ELEKTRISCHES FAHRZEUG**
METHOD FOR OPERATING AN ELECTRIC VEHICLE AND AN ELECTRIC VEHICLE
PROCÉDÉ DE FONCTIONNEMENT D'UN VÉHICULE ÉLECTRIQUE, ET VÉHICULE ÉLECTRIQUE

(30) Priorität: 18.12.2019 DE 102019008788
(43) Veröffentlichungstag der Anmeldung: 26.10.2022
(73) Patentinhaber: SEW-EURODRIVE GmbH & Co. KG, 76646 Bruchsal (DE)
(72) Erfinder: HAUCK, Matthias, 68723 Schwetzingen (DE); WEIS, Patrick, 75045 Wössingen (DE); BOCKELMANN, Gero, 76646 Bruchsal (DE)
(86) Internationale Anmeldenummer: PCT/EP2020/025558
(87) Internationale Veröffentlichungsnummer: WO 2021/121655

(56) Entgegenhaltungen:
- DE-A1- 102009 014 386
- DE-A1- 102015 004 701
- DE-A1- 102017 005 153

## Beschreibung

Die Erfindung betrifft ein Verfahren zum Betreiben eines elektrischen Fahrzeuges und ein elektrisches Fahrzeug.

Als elektrisches Fahrzeug wird vorzugsweise ein fahrerloses, mobiles Assistenzsystem vorgesehen. Alternativ ist ein solches Fahrzeug auch als fahrerloses Transportfahrzeug (FTF) oder AGV (von englisch automated guided vehicle) bezeichenbar.

Aus der DE 10 2007 002 242 A1 ist ein fahrerloses Transportfahrzeug zum Transport von Lasten bekannt. Ein solcher Lasttransport ist als intralogistische Anwendung bezeichenbar. Das fahrerlose Transportfahrzeug wird induktiv mit Energie versorgt.

Aus der DE 195 45 544 A1 ist ein Flurförderbahnsystem bekannt, wobei die Fahrzeuge über Schleifleitungen mit elektrischer Energie versorgt werden. Um das Fahrzeug auch bei ausbleibender externer Energieversorgung betreiben zu können, wird vorgeschlagen, Elektrolyt- oder Goldcaps-Kondensatorspeicher, auch bekannt als Ultrakondensatoren, Superkondensatoren oder Doppelschichtkondensatoren, als elektrische Energiequelle zu verwenden.

Aus der US 6 265 851 B1 ist eine Ultrakondensatorstromversorgung für ein elektrisches Fahrzeug bekannt. Dieses elektrische Fahrzeug verfügt über zwei Energiespeichereinrichtungen, welche wahlweise für den Antrieb des Fahrzeuges verwendet werden können.

Aus der EP 2 419 364 A1 ist ein fahrerloses Transportsystem bekannt, welches zwei Energiespeichereinrichtungen - eine Doppelschichtkondensatoreinrichtung und eine Batterieeinrichtung - aufweist. Im Normalbetrieb versorgt die Doppelschichtkondensatoreinrichtung die Antriebseinrichtung, also den Motor, mit Energie.

Im Notfall, also wenn die Spannung in der Doppelschichtkondensatoreinrichtung unter ein bestimmtes Niveau fällt, wird auf Batteriebetrieb umgeschaltet. Die Antriebseinrichtung wird dann ausschließlich von der Batterieeinrichtung mit Energie versorgt bis die Doppelschichtkondensatoreinrichtung an einer Ladestation wieder aufgeladen wird.

Aus der DE 10 2017 005 153 A1 ist ein Verfahren zum Betreiben eines elektrischen Fahrzeugs und ein elektrisches Fahrzeug bekannt, wobei dieses Fahrzeugzeug über eine Hybridspeichereinrichtung und eine Doppelschichtkondensatoreinrichtung verfügt. Beide Speichereinrichtungen können wahlweise die Fahrantriebseinrichtung mit Energie versorgen.

Aus der US 2008 277 173 A1 ist eine Aufladestation und ein dazugehöriges elektrisches Fahrzeug bekannt.

Aus der DE 10 2015 004 701 A1 ist ein Elektrofahrzeug mit Schnellladefunktion bekannt.

Aus der DE 10 2009 014 386 A1 ist ein Energiespeicher und eine Steuerung zur Energieversorgung eines Traktionsnetzes eines Elektrofahrzeugs bekannt.

Der Erfindung liegt die Aufgabe zugrunde, das Energiemanagement eines elektrischen Fahrzeugs, insbesondere eines fahrerlosen, mobilen Assistenzsystems, welches über zwei verschiedene Arten von Energiespeichern verfügt, derart weiterzubilden, dass die zweite, schneller lad- und entladbare Energiespeichereinrichtung verlustarm für kurzfristige Leistungsspitzen elektrischer Verbraucher verfügbar gehalten wird.

Erfindungsgemäß wird die Aufgabe bei dem Verfahren zum Betreiben eines elektrischen Fahrzeugs nach den in Anspruch 1 angegebenen Merkmalen und bei dem elektrischen Fahrzeug nach den in Anspruch 13 angegebenen Merkmalen gelöst.

Wichtige Merkmale der Erfindung bei dem Verfahren zum Betreiben eines elektrischen Fahrzeuges, insbesondere eines fahrerlosen, mobilen Assistenzsystems (MAS) einer intralogistischen Anwendung, sind, dass das Fahrzeug eine erste Energiespeichereinrichtung, welche insbesondere als wieder aufladbare Batteriespeichereinrichtung ausgebildet ist, eine zweite Energiespeichereinrichtung, welche insbesondere als Doppelschichtkondensatoreinrichtung ausgebildet ist und/oder welche insbesondere schneller auf- und entladbar ist als die erste Energiespeichereinrichtung, eine Energieversorgungseinheit, welche, insbesondere zeitabschnittsweise, Energie zur Aufladung der ersten Energiespeichereinrichtung und/oder der zweiten Energiespeichereinrichtung bereitstellt, und einen ersten elektrischen Verbraucher, insbesondere eine Fahrantriebseinrichtung für die Fahrbewegung des Fahrzeugs oder eine Hubeinrichtung oder eine Handlingseinrichtung, aufweist, wobei der erste elektrische Verbraucher über einen Zwischenkreis mit der zweiten Energiespeichereinrichtung verbunden ist, wobei im Zwischenkreis eine Zwischenkreisspannung herrscht, wobei die erste Energiespeichereinrichtung über eine bidirektionale Wandlervorrichtung mit der Energieversorgungseinheit verbunden ist, wobei die zweite Energiespeichereinrichtung mit der Energieversorgungseinheit verbunden ist, wobei ein erster Leistungsfluss von der ersten Energiespeichereinrichtung zur zweiten Energiespeichereinrichtung stattfindet, wenn die Zwischenkreisspannung unter eine definierbare Spannung fällt, und wobei ein zweiter Leistungsfluss von der zweiten Energiespeichereinrichtung zur ersten Energiespeichereinrichtung jederzeit verhindert wird.

Es kommen also zwei Energiespeichereinrichtungen zum Einsatz, um einen elektrischen Verbraucher mit Energie zu versorgen. Die zweite Energiespeichereinrichtung ist über den sogenannten Zwischenkreis direkt mit dem elektrischen Verbraucher verbunden. Es sind vorteilhafterweise auch mehrere elektrische Verbraucher über den Zwischenkreis mit der zweiten Energiespeichereinrichtung verbindbar. Die Verbraucher sind also parallel an die zweite Energiespeichereinrichtung angeschlossen. Die zweite Energiespeichereinrichtung versorgt den oder die elektrischen Verbraucher mit der notwendigen Energie, sie kann aber auch vom elektrischen Verbraucher beziehungsweise von den elektrischen Verbrauchern zurückgespeiste Energie aufnehmen. Dadurch, dass ein Leistungsfluss von der zweiten zur ersten Energiespeichereinrichtung jederzeit verhindert wird, wird sichergestellt, dass die in der zweiten Energiespeichereinrichtung gespeicherte Energie ausschließlich den elektrischen Verbrauchern des Fahrzeugs zur Verfügung steht. Ein Umladen von der zweiten Energiespeichereinrichtung zur ersten Energiespeichereinrichtung wird also zu jedem Zeitpunkt verhindert. Die erste Energiespeichereinrichtung wird dazu benutzt, die zweite Energiespeichereinrichtung aufzuladen, sobald die Spannung im Zwischenkreis unter eine definierbare Spannung fällt. Es findet in diesem Fall also ein Leistungsfluss von der ersten zur zweiten Energiespeichereinrichtung statt. Die erste Energiespeichereinrichtung hat vorteilhafterweise eine größere Kapazität als die zweite Energiespeichereinrichtung und gleicht somit die Schwäche des niedrigeren Energieinhalts der zweiten Energiespeichereinrichtung aus. Die zweite Energiespeichereinrichtung ist vorteilhafterweise so dimensioniert, dass sie kurzfristige Leistungsspitzen der Verbraucher abpuffern kann. Die erste Energiespeichereinrichtung wird eher für den kontinuierlichen, also durchschnittlichen Leistungsverbrauch der Verbraucher dimensioniert.

Von Vorteil ist dabei, dass die zweite Energiespeichereinrichtung immer mindestens bis zu der definierbaren Spannung aufgeladen ist, also immer zumindest einen definierbaren Energieinhalt aufweist.

Die zweite Energiespeichereinrichtung ist vorteilhaft als Doppelschichtkondensatoreinrichtung ausgebildet und/oder die zweite Energiespeichereinrichtung ist schneller auf- und entladbar als die erste Energiespeichereinrichtung. Eine Doppelschichtkondensatoreinrichtung zeichnet sich dadurch aus, dass sie in wenigen Sekunden aufladbar ist und vollständig entladbar bis Spannung gleich Null. Ihre Zyklenfestigkeit liegt im Bereich 1 Million, sie weist also eine sehr hohe Anzahl an Lade- / Entladezyklen auf. Sie eignet sich daher vorteilhafterweise, um elektrische Verbraucher des elektrischen Fahrzeugs mit Spitzenleistung zu versorgen.

Die erste Energiespeichereinrichtung ist vorteilhaft als Batteriespeichereinrichtung ausgebildet. Die Batteriespeichereinrichtung ist langsamer auf- und entladbar als eine Doppelschichtkondensatoreinrichtung, welche eine vorteilhafte Ausführung für die zweite Energiespeichereinrichtung ist. Vorteilhaft weist die erste Energiespeichereinrichtung eine höhere Energiedichte auf und hat in der Praxis eine geringere Leistungsdichte und eine geringere Zahl an möglichen Lade- / Entladezyklen im Vergleich zur zweiten Energiespeichereinrichtung. Ein Beispiel für eine Batteriespeichereinrichtung ist eine Anordnung, aus einem oder mehreren sekundären elektrochemischen Elementen, insbesondere auf Nickel und/oder Eisen-Basis. Ein solches sekundäres elektrochemisches Element umfasst eine negative Elektrode, eine positive Elektrode, einen porösen Separator, der die negative und die positive Elektrode voneinander trennt sowie einen, insbesondere wässrigen alkalischen, Elektrolyten, mit dem die Elektroden und der Separator getränkt sind. Ein solches sekundäres elektrochemisches Element auf Nickel und/oder Eisen-Basis ist wie ein Kondensator in der Lage, sehr schnell hohe Pulsströme zu liefern, es zeigt aber ansonsten eher ein Batterieverhalten, insbesondere gelten die Kondensator-Gleichungen Q = C U und W = ½ C U² für diese Batteriespeichereinrichtung nicht. Eine solche Batteriespeichereinrichtung weist eine höhere Zyklenfestigkeit auf. Diese Zyklenfestigkeit liegt im Bereich zwischen 1000 und 20000. Lade- und Entladezyklen sind also häufiger durchführbar, bevor die Leistungskriterien der Batteriespeichereinrichtung nicht mehr erfüllt werden. Darüber hinaus weist die Batteriespeichereinrichtung eine Überladestabilität und eine Tiefentladestabilität auf. Sie ist mit bis zu 15 C schnellladefähig. Ein anderes Beispiel für eine Batteriespeichereinrichtung ist ein Li-Ionen Akku.

Bei einer vorteilhaften Ausgestaltung ist der erste elektrische Verbraucher eine Fahrantriebseinrichtung für die Fahrbewegung, insbesondere Traktion, des Fahrzeugs oder eine Hubeinrichtung oder eine Handlingseinrichtung.

Diese Verbraucher umfassen dabei beispielhaft jeweils einen Antriebsmotor, insbesondere Dreiphasen-Wechselstrommotor, welcher von einem Wechselrichter mit Dreiphasen-Spannung gespeist wird. Der Wechselrichter wiederum ist an den Zwischenkreis angeschlossen und wandelt die Gleichspannung in Drehstrom.

Bei einer vorteilhaften Ausgestaltung wird der Energieversorgungseinheit kontaktbehaftet oder berührungslos Energie zugeführt.

Von Vorteil bei der kontaktbehafteten Energiezufuhr ist dabei, dass eine einfache Aufladung der Energiespeicher, beispielsweise mittels Stecker, ermöglicht ist.

Von Vorteil bei der berührungslosen Energiezufuhr ist dabei, dass eine sichere Aufladung der Energiespeicher, beispielsweise mittels Induktion, ermöglicht ist. Bei einer vorteilhaften Ausgestaltung umfasst die Energieversorgungseinheit einen Gleichrichter, der aus einer Sekundärinduktivität des elektrischen Fahrzeugs gespeist wird, insbesondere welcher eine Kapazität derart in Reihe oder parallel zugeschaltet ist, dass die Resonanzfrequenz des so gebildeten Schwingkreises der Frequenz eines in eine stationär angeordnete Primärinduktivität eingeprägten Wechselstromes gleicht. Durch die induktive Energieübertragung ist auch die Sicherheit erhöht und es kommt nicht zu einem Verschleiß von ansonsten erforderlichen Ladekontakten. Zudem ist eine berührsichere Ausführung einfach realisierbar.

Bei einer vorteilhaften Ausgestaltung wird der Energieversorgungseinheit zeitabschnittsweise während der Fahrt Energie zugeführt.

Von Vorteil ist dabei, dass auf Teilbereichen der Fahrstrecke die Energieversorgung ausführbar ist und dadurch die beiden Energiespeichereinrichtungen entweder wieder aufladbar sind oder ihr Ladezustand vollgeladen gehalten wird und somit ihre Standzeit verlängerbar ist, da sie möglichst wenig vollen Ladezyklen ausgesetzt werden, insbesondere also nicht häufig vollständig auf- und entladen werden. Die Alterung ist somit dadurch verringert. Die Energieversorgung ist beispielsweise mittels Schleifleitungen kontaktbehaftet ausführbar. Alternativ ist ein stationär angeordneter Primärleiter entlang der Fahrstrecke angeordnet, über welchen Energie induktiv an eine im elektrischen Fahrzeug angeordnete Sekundärinduktivität übertragen wird.

Bei einer vorteilhaften Ausgestaltung weist die zweite Energiespeichereinrichtung eine Ladeschlussspannung und eine Entladeschlussspannung auf, wobei der Wert der definierbaren Spannung größer als der Wert der Entladeschlussspannung und kleiner als der Wert der Ladeschlussspannung ist.

Von Vorteil ist dabei, dass der elektrische Verbraucher bezüglich des Wertes der definierbaren Spannung dimensionierbar ist. Der Wert der definierbaren Spannung ist auch als Umschaltpunkt bezeichenbar. Das ist der Punkt, an dem der erste Energiespeicher dazu verwendet wird, Energie in den Zwischenkreis beziehungsweise die zweite Energiespeichereinrichtung zu speisen, um die Spannung auf dem Wert der definierbaren Spannung zu halten. Daraus ergibt sich der Vorteil, dass der elektrische Verbraucher bei gleicher Leistung einen geringeren Strom aufnehmen muss und daher der elektrische Verbraucher für kleinere Maximalströme und einen kleineren Betriebsspannungsbereich dimensionierbar ist. Im Fall von elektrischen Motoren ist somit der Motor auch mechanisch kleiner dimensionierbar, es sind also kleinere Motorbaugrößen verwendbar.

Typische Werte für die Ladeschlussspannung U₁ und Entladeschlussspannung U₃ sind U₁ = 360 V und U₃ = 120 V. Unter der Annahme, dass nur der zweite Energiespeicher verwendet wird und dass der maximal zulässige Strom für den elektrischen Verbraucher I_{V,max} = 10 A beträgt, ergibt sich, dass der elektrische Verbraucher maximal eine Leistung von P_{V,max} = 1.200 W besitzen darf. Nur so ist sichergestellt, dass die zweite Energiespeichereinrichtung immer die benötigte Leistung für den elektrischen Verbraucher bereitstellen kann. Verwendet man jedoch zusätzlich die erste Energiespeichereinrichtung und setzt den Umschaltpunkt beispielsweise auf U₂ = 150 V, so ergibt sich bei gleicher Leistung P_{V,max} = 1.200 W ein maximaler Strom von I_{V,max} = 1.200 W / 150 V = 8 A.

Bei einer vorteilhaften Ausgestaltung ist der Wert der definierbaren Spannung abhängig von der vom ersten elektrischen Verbraucher durchschnittlich benötigten Leistung.

Von Vorteil ist dabei, dass die Leistung, die von der ersten Energiespeichereinrichtung in die zweite Energiespeichereinrichtung übertragen wird, der durchschnittlichen, also mittleren, Leistung des elektrischen Verbrauchers entspricht. Die zweite Energiespeichereinrichtung ist dadurch kleiner dimensionierbar, sie muss lediglich die Leistungsspitzen abpuffern. Für die Grundlast, also die mittlere Belastung, kommt die erste Energiespeichereinrichtung auf.

Bei einer vorteilhaften Ausgestaltung weist das Fahrzeug eine Fahrzeugsteuerung zur Steuerung der Fahrbewegung auf, insbesondere wobei die Fahrzeugsteuerung Befehle von einer übergeordneten Steuerung, insbesondere drahtlos, empfängt. Vorteilhafterweise ist die Fahrzeugsteuerung aus der ersten Energiespeichereinrichtung mit Energie versorgbar. Insbesondere ist für die erste Energiespeichereinrichtung ein Batteriespeicher, beispielsweise Li-lonen-Akku verwendbar, dessen Spannungsniveau im Kleinspannungsbereich liegt, insbesondere bei 12V oder 24V oder 48V oder 96V.

Bei einer vorteilhaften Ausgestaltung wird der Wert der definierbaren Spannung dynamisch während dem Betrieb des Fahrzeugs variiert.

Von Vorteil ist dabei, dass auf veränderte Situationen einer intralogistischen Anwendung reagiert werden kann. Wenn beispielsweise bekannt ist, dass für verschiedene Fahrabschnitte verschiedene mittlere Leistungen notwendig sind, so kann der Wert der definierbaren Spannung jeweils für die verschiedenen Fahrabschnitte angepasst werden. Die Anpassung des Wertes der definierbaren Spannung ist beispielsweise durch die Fahrzeugsteuerung ausführbar. Im Fall von mehreren elektrischen Verbrauchern, beispielsweise einer Fahrantriebseinrichtung und einer Hubeinrichtung, ist es beispielsweise denkbar, dass für eine Fahrstrecke zwischen zwei Arbeitsstationen der Wert der definierbaren Spannung anders gesetzt wird als für das Auf- und Abladen einer Last mittels der Hubeinrichtung bei Stillstand des Fahrzeugs.

Bei einer vorteilhaften Ausgestaltung ist der Wert der definierbaren Spannung gleich dem Quotienten aus der vom ersten elektrischen Verbraucher maximal benötigten Leistung und dem für den ersten elektrischen Verbraucher maximal zulässigen Strom ist.

Von Vorteil ist dabei, dass die Betriebsweise der zweiten Energiespeichereinrichtung an die Bedürfnisse des elektrischen Verbrauchers anpassbar ist.

Bei einer vorteilhaften Ausgestaltung wird der zweite Leistungsfluss durch eine zwischen der zweiten Energiespeichereinrichtung und der Wandlervorrichtung angeordnete Diode verhindert. Von Vorteil ist dabei, dass die Verhinderung des zweiten Leistungsflusses einfach realisiert ist.

Bei einer vorteilhaften Ausgestaltung wird ein Ist-Wert eines zwischen einem ersten Anschlusspunkt und einem zweiten Anschlusspunkt fließenden Umladestroms, insbesondere mittels einer Strommesseinrichtung, erfasst, wobei der erste Anschlusspunkt mit der Energieversorgungseinheit und der Wandlervorrichtung verbunden ist, wobei der zweite Anschlusspunkt mit der zweiten Energiespeichereinrichtung und dem elektrischen Verbraucher verbunden ist, wobei der zweite Leistungsfluss dadurch verhindert wird, dass die Wandlervorrichtung zumindest für die Aufladung der ersten Energiespeichereinrichtung deaktiviert wird, wenn der erfasste Ist-Wert des Umladestroms einen minimalen Umladestromgrenzwert, welcher insbesondere nicht negativ ist, unterschreitet.

Von Vorteil ist dabei, dass die Verhinderung des zweiten Leistungsflusses steuerungstechnisch realisiert ist und eine Diode zwischen erster Energiespeichereinrichtung und zweiter Energiespeichereinrichtung verzichtbar ist. Die Funktion der Diode wird also steuerungstechnisch nachgebildet. Die Deaktivierung der Wandlervorrichtung erfolgt dabei zumindest für den Aufladevorgang der ersten Energiespeichereinrichtung, wenn der Ist-Wert der Strommesseinrichtung kleiner als der minimale Umladestromgrenzwert ist. Somit wird sichergestellt, dass der ersten Energiespeichereinrichtung keine Energie aus der zweiten Energiespeichereinrichtung zugeführt wird. Mit anderen Worten wird im Fall einer nicht vorhandenen externen Energieversorgung und Unterschreitung des Umladestromes unter einen minimalen Umladestromgrenzwert aus der bidirektionalen Wandlervorrichtung eine unidirektionale Wandlervorrichtung, die nur noch Leistungsflüsse ausgehend von der ersten Energiespeichereinrichtung zulässt. Die Deaktivierung kann alternativ auch vollständig erfolgen, so dass gar kein Leistungsfluss von und zu der ersten Energiespeichereinrichtung mehr möglich ist.

Für die vorliegende Erfindung gelten dabei folgende Definitionen für die fließenden Ströme:
Wenn das Fahrzeug über eine externe Energieversorgung verfügt, stellt die Energieversorgungseinheit einen Einspeisestrom zur Verfügung. Dieser Einspeisestrom kann dazu verwendet werden, die erste Energiespeichereinrichtung aufzuladen und/oder die zweite Energiespeichereinrichtung aufzuladen und/oder den ersten elektrischen Verbraucher mit Energie zu versorgen. Der Einspeisestrom hat dabei definitionsgemäß immer einen positiven Wert, da die Energieversorgungseinheit nur zur Energieversorgung und nicht zur Energierückspeisung vorgesehen ist.

Der durch die Wandlervorrichtung fließende Strom wird als erster Ladestrom bezeichnet. Der erste Ladestrom ist definitionsgemäß positiv, wenn der ersten Energiespeichereinrichtung Energie zugeführt wird, sie also aufgeladen wird. Der erste Ladestrom ist entsprechend negativ, wenn der ersten Energiespeichereinrichtung Energie entnommen wird, sie also entladen wird.

Entsprechend wird der durch die zweite Energiespeichereinrichtung fließende Strom als zweiter Ladestrom bezeichnet. Der zweite Ladestrom ist definitionsgemäß positiv, wenn der zweiten Energiespeichereinrichtung Energie zugeführt wird, sie also aufgeladen wird. Der zweite Ladestrom ist entsprechend negativ, wenn der zweiten Energiespeichereinrichtung Energie entnommen wird, sie also entladen wird.

Der durch den ersten elektrischen Verbraucher fließende Strom wird als Laststrom bezeichnet. Der Laststrom ist definitionsgemäß positiv, wenn dem ersten elektrischen Verbraucher Energie zugeführt wird. Beispielsweise wenn ein Antriebsmotor motorisch betrieben wird. Der Laststrom ist entsprechend negativ, denn der erste elektrische Verbraucher Energie in den Zwischenkreis zurückspeist. Beispielsweise wenn ein Antriebsmotor generatorisch betrieben wird.

Schließlich wird ein Umladestrom definiert. Dieser Umladestrom fließt zwischen der ersten Energiespeichereinrichtung und der zweiten Energiespeichereinrichtung. Der Umladestrom ist dabei die Differenz aus dem Einspeisestrom und dem ersten Ladestrom. Wenn keine externe Energieversorgung vorhanden ist, der Einspeisestrom also Null ist, entspricht der Umladestrom gerade dem negativen Ladestrom. Darüber hinaus teilt sich der Umladestrom auf in den zweiten Ladestrom und den Laststrom. Der Umladestrom ist also die Summe aus dem zweiten Ladestrom und dem Laststrom. Der Umladestrom ist definitionsgemäß positiv, wenn Strom von der ersten Energiespeichereinrichtung beziehungsweise von der Energieversorgungseinheit in Richtung der zweiten Energiespeichereinrichtung beziehungsweise des ersten elektrischen Verbrauchers fließt. Ein negativer Umladestrom bedeutet daher, dass ein Strom von der zweiten Energiespeichereinrichtung beziehungsweise von dem ersten elektrischen Verbraucher in Richtung der ersten Energiespeichereinrichtung beziehungsweise der Energieversorgungseinheit fließt.

Bei einer vorteilhaften Ausgestaltung wird ein Ist-Wert eines zwischen einem ersten Anschlusspunkt und einem zweiten Anschlusspunkt fließenden Umladestroms, insbesondere mittels einer Strommesseinrichtung, erfasst, wobei der erste Anschlusspunkt mit der Energieversorgungseinheit und Wandlervorrichtung verbunden ist, wobei der zweite Anschlusspunkt mit der zweiten Energiespeichereinrichtung und dem elektrischen Verbraucher verbunden ist, wobei ein Ist-Wert der Zwischenkreisspannung, insbesondere mittels einer Spannungsmessung, erfasst wird, wobei die Wandlervorrichtung eine Drossel, einen Gleichspannungswandler und einen Regler mit einer Kaskadenregelung umfasst, wobei der zweite Leistungsfluss dadurch verhindert wird, dass die Kaskadenregelung abhängig von den erfassten Ist-Werten des Umladestroms und der Zwischenkreisspannung eine an dem Gleichspannungswandler anliegende Wandlerspannung derart stellt oder regelt, dass ein negativer Umladestrom verhindert wird.

Von Vorteil ist dabei, dass die Verhinderung des zweiten Leistungsflusses regelungstechnisch realisiert ist und eine Diode zwischen erster Energiespeichereinrichtung und zweiter

Energiespeichereinrichtung verzichtbar ist. Die Funktion der Diode wird also regelungstechnisch nachgebildet. Vorteilhafterweise wird bei einer Unterschreitung des IstWertes des Umladestroms unter den Umladestromgrenzwert die Wandlervorrichtung nicht sofort vollständig deaktiviert, sondern der erste Ladestrom lediglich begrenzt, so dass ein weiteres Aufladen der ersten Energiespeichereinrichtung durch die Energieversorgungseinheit immer noch möglich ist und gleichzeitig der zweite Leistungsfluss verhindert wird.

Bei einer vorteilhaften Ausgestaltung findet der erste Leistungsfluss von der ersten Energiespeichereinrichtung zur zweiten Energiespeichereinrichtung statt, wenn die Zwischenkreisspannung kleiner als die Ladeschlussspannung ist und die Spannung in der ersten Energiespeichereinrichtung über einer definierbaren Mindestspannung liegt.

Von Vorteil ist dabei, dass die zweite Energiespeichereinrichtung auf eine höhere Spannung ladbar ist, solange noch Leistungsreserven an der ersten Energiespeichereinrichtung vorhanden sind.

Bei einer vorteilhaften Ausgestaltung umfasst die Kaskadenregelung einen Stromregler mit überlagertem Spannungsregler und eine zwischen dem Spannungsregler und Stromregler angeordnete Begrenzung, wobei die Begrenzung einen Sollwert für den Umladestrom auf Werte begrenzt, welche größer als ein minimaler Umladestromgrenzwert, welcher insbesondere nicht negativ ist, sind.

Von Vorteil ist dabei, dass die Kaskadenregelung erlaubt, die zweite Energiespeichereinrichtung auf einen definierten Spannungswert hin zu regeln und gleichzeitig der Umladestrom kontrolliert wird.

Bei einer vorteilhaften Ausgestaltung umfasst das Fahrzeug neben dem ersten elektrischen Verbraucher weitere elektrische Verbraucher, wobei alle elektrischen Verbraucher über den Zwischenkreis, insbesondere parallel, mit der zweiten Energiespeichereinrichtung verbunden sind.

Von Vorteil ist dabei, dass über den Zwischenkreis ein Austausch von Energie möglich ist. Wenn beispielsweise ein Antriebsmotor einer Fahrantriebseinrichtung generatorisch betrieben wird, so kann die erzeugte Energie genutzt werden, um beispielsweise eine Hubeinrichtung auf dem Fahrzeug zu betreiben.

Wichtige Merkmale bei dem erfindungsgemäßen elektrischen Fahrzeug, insbesondere zur Durchführung eines Verfahrens nach einem der Ansprüche 1 bis 12, sind, dass das Fahrzeug eine erste Energiespeichereinrichtung, welche insbesondere als wieder aufladbare Batteriespeichereinrichtung ausgebildet ist, eine zweite Energiespeichereinrichtung, welche insbesondere als Doppelschichtkondensatoreinrichtung ausgebildet ist und/oder welche insbesondere schneller auf- und entladbar ist als die erste Energiespeichereinrichtung, eine Energieversorgungseinheit, welche, insbesondere zeitabschnittsweise, Energie zur Aufladung der ersten Energiespeichereinrichtung und/oder der zweiten Energiespeichereinrichtung bereitstellt und einen ersten elektrischen Verbraucher, welcher über einen Zwischenkreis mit der zweiten Energiespeichereinrichtung verbunden ist, aufweist, wobei im Zwischenkreis eine Zwischenkreisspannung herrscht, wobei die erste Energiespeichereinrichtung über eine bidirektionale Wandlervorrichtung mit der Energieversorgungseinheit verbunden ist,
wobei die zweite Energiespeichereinrichtung mit der Energieversorgungseinheit verbunden ist, wobei das Fahrzeug derart ausgestaltet ist, dass ein erster Leistungsfluss von der ersten Energiespeichereinrichtung zur zweiten Energiespeichereinrichtung stattfindet, wenn die Zwischenkreisspannung unter eine definierbare Spannung fällt, und dass ein zweiter Leistungsfluss von der zweiten Energiespeichereinrichtung zur ersten Energiespeichereinrichtung jederzeit verhindert wird.

Es ergeben sich dabei die gleichen Vorteile wie bei dem erfindungsgemäßen Verfahren nach Anspruch 1.

Bei einer vorteilhaften Ausgestaltung ist die Energieversorgungseinheit als regelbare Stromquelle ausgebildet.

Von Vorteil ist dabei, dass dies insbesondere für eine induktiv gekoppelte Energieversorgungseinheit sehr einfach zu realisieren ist.

Bei einer vorteilhaften Ausgestaltung ist die erste Energiespeichereinrichtung derart trennbar am elektrischen Fahrzeug angeordnet, dass ein Austausch der ersten Energiespeichereinrichtung ermöglicht ist.

Von Vorteil ist dabei, dass bei Verschleiß der ersten Energiespeichereinrichtung diese einfach austauschbar ist. Die erste Energiespeichereinrichtung ist also nicht fest im Fahrzeug montiert oder integriert, sondern lösbar am Fahrzeug angebaut. Insbesondere bei einer Verwendung von Schutzkleinspannung für die erste Energiespeichereinrichtung ergibt sich der Vorteil, dass die erste Energiespeichereinrichtung auch von einer nicht entsprechend ausgebildeten Person einfach ausgetauscht werden kann. Dies ist insbesondere dann vorteilhaft, wenn die erste Energiespeichereinrichtung nicht auf die Lebensdauer des Fahrzeuges ausgelegt wird und daher ein Verschleißteil ist.

Bei einer vorteilhaften Ausgestaltung ist an der ersten Energiespeichereinrichtung mittels einer Strommessung und/oder Spannungsmessung ein Überspannungsschutz und/oder Unterspannungsschutz und/oder Überstromschutz bereitgestellt und/oder an der ersten Energiespeichereinrichtung mittels einer Temperaturmessung ein Übertemperaturschutz bereitgestellt und/oder an der zweiten Energiespeichereinrichtung mittels einer Strommessung und/oder Spannungsmessung ein Überspannungsschutz und/oder Überstromschutz bereitgestellt und /oder an der zweiten Energiespeichereinrichtung mittels einer Temperaturmessung ein Übertemperaturschutz bereitgestellt.

Von Vorteil ist dabei, dass die Sicherheit der Energiespeichereinrichtungen erhöht ist und diese nicht zerstört werden. Dies ist insbesondere für den Fall wichtig, wenn durch einen Verbraucher Energie in eine Energiespeichereinrichtung zurückgespeist wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

In der Figur 1 ist ein erfindungsgemäßes mobiles Assistenzsystem mit einem Verbraucher schematisch gezeigt. Das mobile Assistenzsystem wird im Folgenden auch als MAS bezeichnet.

In der Figur 2 ist der Verlauf der Zwischenkreisspannung U_{ZK} über der Zeit für den Fall gezeigt, dass einem Verbraucher Energie aus dem Zwischenkreis zugeführt wird.

In der Figur 3 ist ein zweites Ausführungsbeispiel eines erfindungsgemäßen mobilen Assistenzsystems mit einem Verbraucher schematisch gezeigt.

In der Figur 4 ist eine Reglerstruktur für das zweite Ausführungsbeispiel schematisch gezeigt.

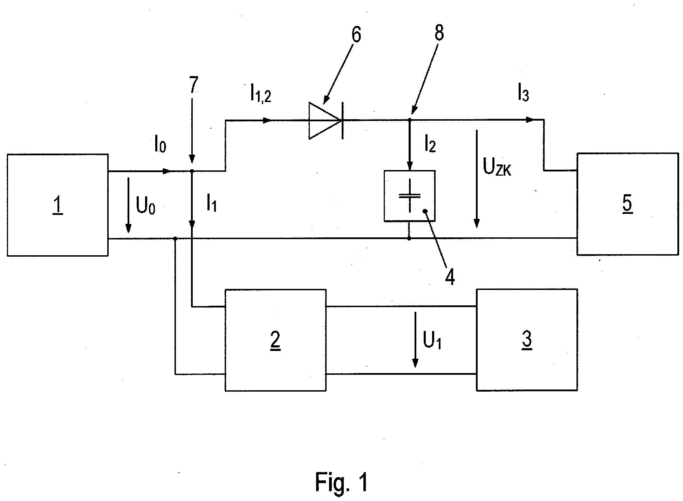

Figur 1 zeigt schematisch ein Blockschaltbild derjenigen Komponenten eines MAS, welche dem Energiemanagement des Fahrzeuges zugerechnet werden. Das MAS weist zur Energieversorgung eine Energieversorgungseinheit 1 auf, welche in diesem Ausführungsbeispiel als regelbare Stromquelle ausgebildet ist. Hierzu weist die Energieversorgungseinheit 1 einen nicht weiter dargestellten Regler auf, welcher den Einspeisestrom I₀ der Energieversorgungseinheit 1 regelt und damit einhergehend eine Einspeisespannung U₀ bereitstellt. Diese Einspeisespannung U₀ ist eine Gleichspannung und für ein MAS ist die Einspeisespannung U₀ vorteilhaft im Bereich von 120 V bis 600 V. Wenn in der vorliegenden Erfindung von einer Spannung die Rede ist, ist immer eine Gleichspannung damit gemeint, außer es wird explizit eine Wechselspannung definiert.

Die Energieversorgungseinheit 1 für das MAS kann unterschiedlich ausgeführt sein. Beispielsweise ist ein einfaches Ladegerät mit Steckkontakt ausführbar, so dass das MAS an bestimmten Ladestationen kontaktbehaftet mit Energie versorgbar ist. Ebenso ist eine kontaktbehaftete Energieversorgung während der Fahrt des MAS beispielsweise mittels Schleifleitungen ausführbar. Alternativ dazu ist eine berührungslose Energieversorgung ausführbar, beispielsweise eine induktive Energieversorgung. Diese kann dabei durch gekoppelte Primär- und Sekundärinduktivitäten stattfinden. Auch hier ist sowohl eine Versorgung an stationären Ladestationen als auch eine Versorgung während der Fahrt des MAS denkbar, beispielsweise durch im oder auf dem Hallenboden verlegte Primärleiter. Wenn eine externe Energieversorgung vorhanden ist, wird durch die Energieversorgungseinheit 1 der Einspeisestrom I₀ bereitgestellt, welcher definitionsgemäß positiv ist. Wenn keine externe Energieversorgung vorhanden ist, beispielsweise, weil das MAS auf einer Teilstrecke ohne Schleifleitungen oder induktiver Versorgung fährt, wird folglich kein Einspeisestrom bereitgestellt beziehungsweise der Einspeisestrom I₀ beträgt Null.

Das Ladegerät 1 ist mit einer bidirektionalen Wandlervorrichtung 2 verbunden, an welche wiederum eine erste Energiespeichereinrichtung 3 angeschlossen ist. Im vorliegenden Beispiel ist die bidirektionale Wandlervorrichtung 2 als bidirektionaler DC/DC-Wandler und die erste Energiespeichereinrichtung 3 als Batteriespeicher ausgebildet. Durch den bidirektionalen DC/DC-Wandler 2 ist es daher möglich, dem Batteriespeicher 3 Energie zuzuführen oder dem Batteriespeicher 3 Energie zu entnehmen. Der DC/DC-Wandler ist dabei als nicht potentialgetrennter oder vorteilhaft als potentialgetrennter DC/DC-Wandler ausführbar.

Vorteilhaft weist der Batteriespeicher 3 Spannungen U₁ im Bereich von Kleinspannungen, vorteilhaft 12V, 24V oder 48V auf.

Der Strom, welcher dem DC/DC-Wandler 2 zugeführt wird, wird als erster Ladestrom I₁ bezeichnet. Der erste Ladestrom I₁ ist definitionsgemäß positiv, wenn dem Batteriespeicher 3 Energie zugeführt wird, er also aufgeladen wird. Der erste Ladestrom I₁ ist entsprechend negativ, wenn dem Batteriespeicher 3 Energie entnommen wird, er also entladen wird.

Der DC/DC-Wandler 2 wandelt dabei wahlweise die Einspeisespannung U₀ in die Batteriespannung U₁ um, wenn der Batteriespeicher 3 geladen wird, oder er wandelt die Batteriespannung U₁ in die Einspeisespannung U₀ um, wenn der Batteriespeicher 3 entladen wird. Die Auf- und Entladung ist sowohl für den Fall einer vorhandenen externen Energieversorgung als auch für den Fall ohne externe Energieversorgung möglich, je nach Anforderung der intralogistischen Applikation. Das Spannungsniveau U₀ wird also durch die Energieversorgungseinheit 1 und/oder durch den DC/DC-Wandler 2 bereitgestellt.

Des Weiteren ist das Ladegerät 1 mit einer zweiten Energiespeichereinrichtung 4 verbunden, welche in diesem Ausführungsbeispiel als Doppelschichtkondensator 4 ausgeführt ist. Hierbei gilt, dass statt eines Doppelschichtkondensators auch eine Anordnung aus mehreren parallel und/oder seriell verschalteten Doppelschichtkondensatoren einsetzbar ist. Die folgenden Ausführungen für einen Doppelschichtkondensator gelten daher analog für eine Doppelschichtkondensatoreinrichtung. Der Doppelschichtkondensator 4 und der DC/DC-Wandler 2 sind dabei parallel am Ladegerät 1 angeschlossen. Parallel zum Doppelschichtkondensator 4 ist darüber hinaus ein elektrischer Verbraucher 5 angeschlossen, welcher in diesem Ausführungsbeispiel als Fahrantriebseinrichtung für die Traktion des Fahrzeuges ausgebildet ist. Beispielsweise ist die Fahrantriebseinrichtung als 3-Phasen-Drehstrommotor mit vorgeschaltetem 3-Phasen-Wechselrichter ausführbar ist. Der Wechselrichter wandelt dabei in bekannter Weise die am Wechselrichter anliegende Gleichspannung in eine 3-Phasen-Wechselspannung um, mit welcher der Drehstrommotor, beispielsweise ein Käfigläufer, betrieben wird. Die Fahrantriebseinrichtung 5 kann dabei auch mehrere Motoren aufweisen, welche jeweils von einem eigenen Wechselrichter betreibbar sind. Darüber hinaus ist der Wechselrichter auch rückspeisefähig ausführbar, so dass bei generatorischem Betrieb der Antriebsmotoren ein Rückspeisen von Energie zum Aufladen des Doppelschichtkondensators 4 möglich ist.

Neben Antriebseinrichtungen zur Traktion des MAS sind zusätzlich auch weitere Verbraucher denkbar, wie beispielsweise Hubeinrichtungen zur Aufnahme einer Last oder Handlingseinrichtungen zur Bewegung eines Objektes, beispielsweise ein Roboterarm. Diese sind beispielsweise parallel zum ersten elektrischen Verbraucher 5 anschließbar.

Bei dem in Figur 1 gezeigten Ausführungsbeispiel ist zwischen einem ersten Anschlusspunkt 7 des DC/DC-Wandlers 2 und einem zweiten Anschlusspunkt 8 des Doppelschichtkondensators 4 eine Diode 6 angeordnet, deren Funktion noch später beschrieben wird. Durch diese Diode 6 ergeben sich zwei Spannungsniveaus. Während am ersten Anschlusspunkt 7 das Spannungsniveau U₀ vorliegt, befinden sich der Doppelschichtkondensator 4 und die Fahrantriebseinrichtung 5 mit ihrem gemeinsamen zweiten Anschlusspunkt 8 auf dem Spannungsniveau U_{ZK} mit der Zwischenkreisspannung U_{ZK}. Der Doppelschichtkondensator 4 und die Fahrantriebseinrichtung 5 sind also durch einen gemeinsamen Zwischenkreis verbunden und vom DC/DC-Wandler 2 über die Diode getrennt. Der DC/DC-Wandler 2, der Doppelschichtkondensator 4 und die Fahrantriebseinrichtung 5 sind daher im Fall von vorhandener externer Energieversorgung mit der Einspeisespannung U₀ versorgbar. Wenn die Spannung im Zwischenkreis U_{ZK} also kleiner als die Einspeisespannung U₀ ist, steigt diese so lange an, bis sie das Niveau der Einspeisespannung U₀ erreicht hat. Aufgrund des Spannungsabfalls über der Diode 6 wird diese Spannung geringfügig kleiner sein als die Einspeisespannung U₀. Da die Einspeisespannung U₀ sich jedoch üblicherweise im Bereich von 120 V und mehr befindet, ist für diesen Fall der Spannungsabfall über der Diode 6 vernachlässigbar. Sollte keine externe Energieversorgung vorhanden sein und der DC/DC-Wandler 2 auch keine Energie einspeisen, so kann die Einspeisespannung U₀ kleiner sein als U_{ZK}, während die Zwischenkreisspannung immer noch durch den Doppelschichtkondensator auf einem positiven Niveau gehalten wird. Durch die Diode 6 wird dabei ein Umladen vom Doppelschichtkondensator 4 zum Batteriespeicher 3 permanent verhindert, also jederzeit, also zu jedem Zeitpunkt verhindert. Es ist daher prinzipiell nicht möglich und auch nicht gewünscht, dass Energie vom Doppelschichtkondensator 4 zum Batteriespeicher 3 übertragen wird.

Der Strom, welcher dem Doppelschichtkondensator 4 zugeführt wird, wird als zweiter Ladestrom I₂ bezeichnet. Der zweite Ladestrom I₂ ist definitionsgemäß positiv, wenn dem Doppelschichtkondensator 4 Energie zugeführt wird, er also aufgeladen wird. Der zweite Ladestrom I₂ ist entsprechend negativ, wenn dem Doppelschichtkondensator 4 Energie entnommen wird, er also entladen wird.

Der Strom, welcher der Fahrantriebseinrichtung 5 zugeführt wird, wird als Laststrom I₃ bezeichnet. Der Laststrom I₃ ist definitionsgemäß positiv, wenn der Fahrantriebseinrichtung 5 Energie zugeführt wird, die Antriebsmotoren also motorisch betrieben werden. Der Laststrom I₃ ist entsprechend negativ, wenn die Fahrantriebseinrichtung 5 Energie zurückspeist, beispielsweise, weil die Antriebsmotoren beim Abbremsen generatorisch betrieben werden.

Die zwischen den Anschlusspunkten 7 und 8 angeordnete Diode 6 verhindert, dass Energie vom Zwischenkreis zum DC/DC-Wandler 2 beziehungsweise über den DC/DC-Wandler 2 zum Batteriespeicher 3 gelangt. Ein Umladen von Energie vom Doppelschichtkondensator 4 zum Batteriespeicher 3 ist also zu jedem Zeitpunkt ausgeschlossen. Mit anderen Worten wird ein Leistungsfluss vom Doppelschichtkondensator zum Batteriespeicher durch die Diode verhindert. In umgekehrter Richtung ist ein Leistungsfluss möglich und auch gewünscht. Es ist also Energie aus dem Batteriespeicher 3 dazu verwendbar, die Spannung U_{ZK} im Zwischenkreis zu erhöhen. Der Doppelschichtkondensator 4 ist also durch das Ladegerät und/oder durch den Batteriespeicher aufladbar, während der Batteriespeicher nur durch das Ladegerät aufladbar ist.

Der Strom, der zwischen den beiden Anschlusspunkten 7, 8 und daher durch die Diode 6 fließt, wird als Umladestrom I_{1,2} bezeichnet. Der Umladestrom ist definitionsgemäß positiv, wenn Strom vom ersten Anschlusspunkt 7, also vom DC/DC-Wandler beziehungsweise vom Ladegerät 1, zum zweiten Anschlusspunkt 8, also in Richtung des Zwischenkreises beziehungsweise in Richtung des Doppelschichtkondensators 5 und der Fahrantriebseinrichtung 5 fließt. Ein negativer Umladestrom I_{1,2} wird in der vorliegenden ersten Ausführungsform durch die Diode 6 verhindert. Energie, die einmal im Doppelschichtkondensator 4 gespeichert wurde, soll nicht mehr dazu verwendet werden, den Batteriespeicher 3 aufzuladen.

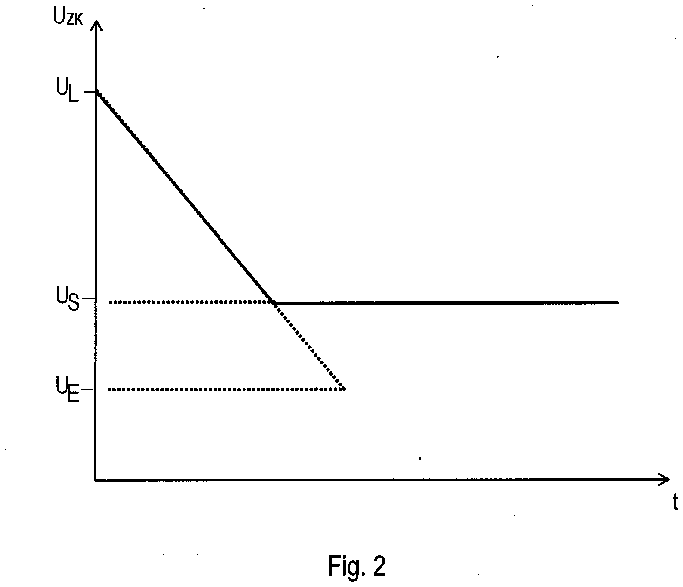

Der Doppelschichtkondensator 4 weist eine Ladeschlussspannung U_{L}, also eine Maximalspannung auf die er maximal aufladbar ist, und eine Entladeschlussspannung U_{E}, also eine Minimalspannung welche insbesondere größer als Null ist, auf. Diese charakteristischen Spannungswerte sind durch die Bauart des Doppelschichtkondensators vorgegeben. Typische Werte sind beispielsweise U_{L} = 350 V und U_{E} = 120 V. Die Fahrantriebseinrichtung 5 muss also in diesem Spannungsbereich mit der notwendigen Leistung versorgbar sein. Daher müsste, wenn nur der Doppelschichtkondensator 4 als einziger Energiespeicher verwendet werden würde, die Fahrantriebseinrichtung 5 für eine maximal zu erwartende Leistung auf die kleinste Spannung und folglich auf den größten Strom ausgelegt werden. Dies würde in der Regel dazu führen, dass beispielsweise bei den Antriebsmotoren größere Baugrößen verwendet werden müssen. Um die Auslegung dahingehend zu verbessern, dass kleinere Baugrößen verwendbar sind, sorgt der DC/DC-Wandler 2 mit Batteriespeicher 3 dafür, dass die Zwischenkreisspannung U_{ZK} nicht unter ein definierbares Spannungsniveau U_{S} fällt. Dies ist in Figur 2 schematisch für den Fall gezeigt, dass die Fahrantriebseinrichtung 5 kontinuierlich Energie benötigt und keine externe Energieversorgung vorhanden ist. Der Doppelschichtkondensator 4 ist zunächst voll aufgeladen auf dem Spannungsniveau U_{L}. Mit zunehmender Zeit sinkt die Spannung U_{ZK} im Zwischenkreis bis sie eine definierte Umschaltspannung U_{S} erreicht. Spätestens zu diesem Zeitpunkt wird dann der DC/DC-Wandler 2 derart betrieben, dass Energie vom Batteriespeicher 3 in den Zwischenkreis übertragen wird, um dort das Spannungsniveau zumindest auf U_{S} zu halten. Die Zwischenkreisspannung U_{ZK} ist beispielsweise mittels einer einfachen Spannungsmessung ermittelbar. Insgesamt ist es möglich, die Antriebe kleiner zu dimensionieren. Die Spannung U_{S}, an dem die Umschaltung stattfindet, ist also als Bemessungsspannung zur Dimensionierung der Leistungselektronik und der Antriebe verwendbar und wird vorliegend als Umschaltspannung U_{S} bezeichnet.

Den Befehl zur Aktivierung des DC/DC-Wandlers 2 ist beispielsweise durch eine in den Figuren nicht gezeigte Fahrzeugsteuerung ausführbar. Diese Fahrzeugsteuerung steuert das Energiemanagement des Fahrzeugs und die entsprechenden Fahrbewegungen. Es ist alternativ oder zusätzlich auch denkbar, dass der DC/DC-Wandler selbst eine Steuerelektronik aufweist, welcher der Wert der gemessenen Zwischenkreisspannung U_{ZK} zugeführt wird und welche dann bei Unterschreitung der Umschaltspannung U_{S} entsprechende Schritte veranlasst, dass Energie in den Zwischenkreis übertagen wird.

Der Batteriespeicher hat eine große Kapazität und gleicht die Schwäche des niedrigen Energiegehalts des Doppelschichtkondensators aus. Entspricht die vom Batteriespeicher in den Zwischenkreis zugeführte Leistung der mittleren Leistung einer intralogistischen Applikation, so wird die Spannung am Doppelschichtkondensator und somit im Zwischenkreis im Mittel bei U_{S} bleiben. Dies führt zu günstigen Betriebsbedingungen des Doppelschichtkondensators. Der Doppelschichtkondensator puffert mögliche Leistungsspitzen der Fahrantriebseinrichtung,

während der Batteriespeicher für kontinuierlichen Verbrauch der Fahrantriebseinrichtung auslegbar ist. Sind größere Leistungsreserven am DC/DC-Wandler verfügbar, so kann der Doppelschichtkondensator auch erneut auf Ladeschlussspannung U_{L} geladen werden.

Für die oben genannten beispielhaften Werte von U_{L} = 350 V und U_{E} = 120 V ergibt sich daher folgender Vorteil gegenüber einem System mit nur einem Doppelschichtkondensator. Unter der Annahme, dass der maximale Strom der Leistungselektronik der Fahrantriebseinrichtung auf I_{V,max} =10 A begrenzt ist, würde sich für den Fall des alleinigen Doppelschichtkondensators mit U_{E} = 120 V eine maximale Leistung von P_{V,max} = U_{E} I_{V,max} = 1.200 W ergeben. Wählt man den Umschaltpunkt für den Fall mit zwei Energiespeichern beispielsweise auf U_{S} = 180 V, so ergibt sich eine maximale Leistung von P_{V,max} = U_{S} I_{V,max} = 1.800 W.

Wenn die Antriebseinrichtung 5 generatorisch betrieben wird, kann die dadurch erzeugte Energie verwendet werden, um den Doppelschichtkondensator 4 wieder aufzuladen. Dabei wird vorteilhafterweise sichergestellt, dass die Spannung, die am Doppelschichtkondensator 4 anliegt, die Ladeschlussspannung U_{L} nicht überschreitet. Dies ist beispielsweise mittels eines Überspannungsschutzes einfach ausführbar.

Die Diode 6 hat wie beschrieben die Aufgabe, ein Umladen vom Doppelschichtkondensator 4 zum Batteriespeicher 3 zu verhindern. Die Energie, die der Doppelschichtkondensator 4 einmal aufgenommen hat, soll nicht wieder in den Batteriespeicher 3 gelangen und lediglich der Fahrantriebseinrichtung 5 zur Verfügung stehen. Die, insbesondere permanente, Verhinderung dieses Leistungsflusses ist alternativ zur Diode auch regelungstechnisch beziehungsweise steuerungstechnisch in einem zweiten Ausführungsbeispiel abbildbar. Hierzu wird der Umladestrom I_{1,2} mittels einer Strommesseinrichtung gemessen. Die Strommesseinrichtung ersetzt dabei die in Figur 1 gezeigte Diode, ansonsten gelten für das zweite Ausführungsbeispiel alle bisher definierten Einheiten und definierten Ströme wie zu Figur 1 beschrieben. Die Strommesseinrichtung übermittelt einen erfassten Ist-Wert I_{1,2_ist} des Umladestroms I_{1,2} an den DC/DC-Wandler 2, welcher in diesem Fall beispielsweise eine Signalelektronik umfasst. In dieser ist ein definierter minimaler Umladestromgrenzwert I_{1,2_min} hinterlegt, bei dessen Unterschreitung der DC/DC-Wandler zumindest für die Aufladung des Batteriespeichers deaktiviert wird. Das bedeutet, dass diese Deaktivierung nur die Spannungswandlung vom Spannungsniveau U₀ zum Spannungsniveau U₁ umfasst, während die umgekehrte Spannungswandlungsrichtung nicht deaktiviert wird.

Alternativ ist auch eine komplette Deaktivierung des DC/DC-Wandlers, also Abschaltung, realisierbar. Der Umladestromgrenzwert I_{1,2_min} ist bevorzugt ein positiver Wert und liegt insbesondere so weit oberhalb des Wertes Null, dass durch eventuelle Zeitverzögerungen der Umladestrom I_{1,2} nicht unterhalb Null fällt, also nicht negativ wird. Es wird also steuerungstechnisch verhindert, dass ein Leistungsfluss vom Doppelschichtkondensator 4 zum Batteriespeicher 2 stattfindet. Vorteilhaft umfasst die Deaktivierung des DC/DC-Wandlers 2 nur die Spannungswandlung vom Spannungsniveau U₀ zum Spannungsniveau U₁. Die umgekehrte Spannungswandlungsrichtung wird also nicht deaktiviert.

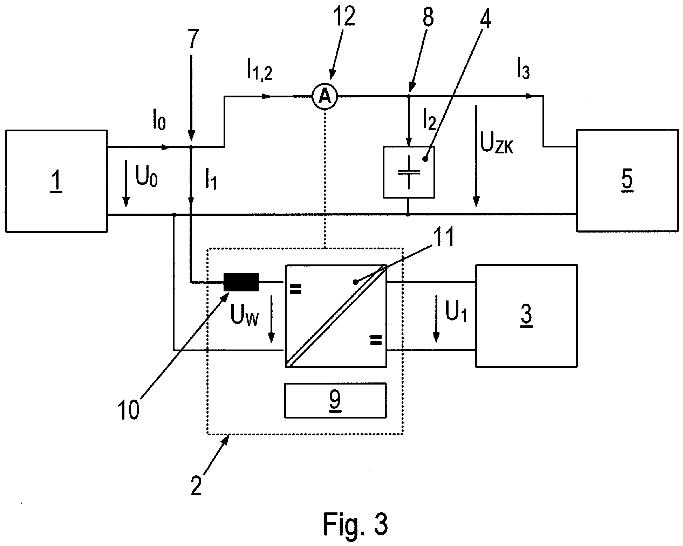

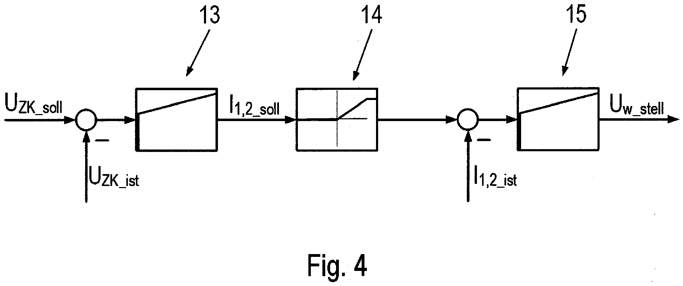

Ein drittes Ausführungsbeispiel ist in den Figuren 3 und 4 beschreiben. Auch hier wird wie im zweiten Ausführungsbeispiel der Umladestrom I_{1,2} zwischen dem ersten Anschlusspunkt 7 und dem zweiten Anschlusspunkt 8 mittels einer zwischen diesen Anschlusspunkten angeordneten Strommesseinrichtung 12 gemessen. Es wird also regelungstechnisch ein Leistungsfluss vom Doppelschichtkondensator zum Batteriespeicher verhindert. Die Strommesseinrichtung 12 ersetzt dabei die in Figur 1 gezeigte Diode 6. Die Strommesseinrichtung 12 überträgt den erfassten Ist-Wert I_{1,2_ist} des Umladestroms I_{1,2} an die Wandlervorrichtung 2, welcher vorliegend detaillierter dargestellt ist. Die Wandlervorrichtung 2 umfasst einen nachfolgend beschriebenen

Kaskadenregler 9, einen bidirektionalen Gleichspannungswandler 11 und eine Drossel 10. Die Bezeichnung der Ströme beziehungsweise die Definition der Stromrichtungen ist die gleiche wie im ersten Ausführungsbeispiel. Der Gleichspannungswandler 11 wandelt die mit U_{W} bezeichnete Wandlerspannung in die Batteriespannung U₁ und umgekehrt. Da im vorliegenden Fall keine Diode vorhanden ist, ist das Spannungsniveau U₀ gleich dem Zwischenkreisniveau U_{ZK}. Diese Wandlerspannung U_{W} kann sich von der Zwischenkreisspannung U_{ZK} unterscheiden, da zwischen dem Gleichspannungswandler 11 und dem ersten Anschlusspunkt 7 eine Induktivität 8 angeordnet ist. Im vorliegenden Beispiel ist diese Induktivität 10 Teil der Wandlervorrichtung 2, so dass die Spannung, mit welcher die Wandlervorrichtung 2 versorgbar ist, der Einspeisespannung U₀ entspricht.

Die Verhinderung des Umladens vom Doppelschichtkondensator 4 zum Batteriespeicher 3 erfolgt dabei regelungstechnisch mittels des Kaskadenreglers 9 wie nachfolgend beschrieben. Neben dem Ist-Wert des Umladestroms I_{1,2_ist} wird dem Kaskadenregler 9 auch der Ist-Wert U_{ZK_ist} der Zwischenkreisspannung U_{ZK} zugeführt. Der Ist-Wert U_{ZK_ist} wird anhand einer in der Figur 3 nicht dargestellten Spannungsmessung erfasst.

In Figur 4 ist die im Kaskadenregler 9 implementierte Kaskadenregelung umfassend einen Stromregler 15 mit überlagertem Spannungsregler 13 dargestellt. Zwischen den beiden Reglern 13, 15 ist eine Sollwertbegrenzung 14 angeordnet.

Zunächst wird, beispielsweise von der Fahrzeugsteuerung, ein Sollwert für die Zwischenkreisspannung U_{ZK_soll} vorgegeben. Dieser wird mit dem erfassten Ist-Wert der Zwischenkreisspannung U_{ZK_ist} verglichen und die Differenz dem Spannungsregler 13 als Eingangsgröße zugeführt. Der Spannungsregler 13 generiert als Ausgangsgröße einen Sollwert für den Umladestrom I_{1,2_soll}. Um negative Umladeströme I_{1,2} zu vermeiden, wird der Sollwert für den Umladestrom durch eine Begrenzung 14 auf Werte begrenzt die größer als ein minimaler Umladestromgrenzwert I_{1,2_min} sind. In anderen Worten werden Werte für den Sollwert I_{1,2_soll} > I_{1,2_min} durch die Begrenzung 14 nicht verändert und Werte für den Sollwert I_{1,2_soll} < I_{1,2_min} durch die Begrenzung 14 auf den minimalen Umladestromgrenzwert I_{1,2_min} gesetzt. Der minimale Umladestromgrenzwert I_{1,2_min} ist ein nicht negativer Wert. Für einen idealen Regler ist auch I_{1,2_min} = 0 denkbar. Der so durch die Begrenzung 14 erzeugte neue Wert für den Sollwert des Umladestroms I_{1,2_soll} wird mit dem Ist-Wert des Umladestroms I_{1,2_ist} verglichen und die Differenz dem Stromregler 15 als Eingangsgröße zugeführt. Der Stromregler generiert schließlich als Ausgangsgröße einen Stellwert für die Wandlerspannung U_{W_stell}. Das bedeutet, dass die Wandlerspannung U_{W_stell} lediglich eingestellt wird, ohne diese zu regeln.

In der in Figur 2 skizzierten Situation, also wenn keine externe Energieversorgung vorliegt (I₀ = 0) und der Fahrantriebseinrichtung 5 kontinuierlich Energie zugeführt wird, wäre mittels des Kaskadenreglers derart ausführbar, dass der Sollwert der Zwischenkreisspannung U_{ZK_soll} auf die Umschaltspannung U_{S} gesetzt wird. So lange die Zwischenkreisspannung U_{ZK} größer als die Umschaltspannung U_{S} ist, also U_{ZK_ist} > U_{S} = U_{ZK_soll} , wird der Spannungsregler 13 versuchen, die Zwischenkreisspannung U_{ZK} zu erniedrigen, indem er einen Sollwert für den Umladestrom I_{1,2_soll} vorgibt, der negativ ist. Durch die Begrenzung wird dieser Sollwert jedoch auf den minimalen Umladestromgrenzwert I_{1,2_min}, beispielsweise I_{1,2_min} = 0,1 A gesetzt.

Sollte der Umladestrom noch über diesem Grenzwert liegen, also I_{1,2_ist} > 0,1 A, wird der Spannungsregler 15 die Stellgröße U_{W_stell} derart variieren, dass sich eine Erniedrigung des Umladestroms ergibt, der Batteriespeicher 3 den Doppelschichtkondensator 4 also nicht stützt. Durch den Grenzwert I_{1,2_min} ist dabei sichergestellt, dass der Kaskadenregler bei Unterschreiten dieser Grenze noch so rechtzeitig reagieren kann, so dass der Umladestrom I_{1,2} nicht negativ wird.

Sollte die Zwischenkreisspannung U_{ZK} durch den Energieverbrauch der Fahrantriebseinrichtung 5 unter die Umschaltspannung U_{S} fallen, wird der Stromregler 13 einen größeren positiven Sollwert I_{1,2_soll} vorgeben, um so das Spannungsniveau bei U_{S} zu halten.

Auch in anderen Situationen, bei denen sich ein negativer Umladestrom I_{1,2} ergeben könnte, beispielsweise ein plötzlicher Einbruch der externen Energieversorgung oder ein Rückspeisen von Energie durch die Fahrantriebseinrichtung 5, sorgt der Kaskadenregler 9 dafür, dass im Endeffekt kein Leistungsfluss vom Doppelschichtkondensator 4 zu Batteriespeicher 3 erfolgt. In diesem Zusammenhang sei darauf hingewiesen, dass bei der vorliegenden Offenbarung unter einem Leistungsfluss, beispielsweise vom Doppelschichtkondensator 4 zum Batteriespeicher 3, immer ein Ladungstransfer verstanden wird, welcher signifikant zu einer Änderung des entsprechenden Energiegehalts einer Energiespeichereinrichtung beiträgt.

### Bezugszeichenliste

- 1: Energieversorgungseinheit
- 2: Bidirektionaler DC/DC-Wandler
- 3: Erste Energiespeichereinrichtung
- 4: Zweite Energiespeichereinrichtung
- 5: Elektrischer Verbraucher
- 6: Diode
- 7: Erster Anschlusspunkt
- 8: Zweiter Anschlusspunkt
- 9: Kaskadenregler
- 10: Drossel
- 11: Gleichspannungswandler
- 12: Strommesseinrichtung
- 13: Spannungsregler
- 14: Begrenzung
- 15: Stromregler
- U_{L}: Ladeschlussspannung
- U_{S}: Umschaltspannung
- U_{E}: Entladeschlussspannung
- I₀: Einspeisestrom
- I₁: Erster Ladestrom
- I₂: Zweiter Ladestrom
- I_{1,2}: Umladestrom
- I₃: Laststrom

## Patentansprüche

1. Verfahren zum Betreiben eines elektrischen Fahrzeuges, insbesondere eines fahrerlosen, mobilen Assistenzsystems einer intralogistischen Anwendung, aufweisend
- eine erste Energiespeichereinrichtung (3), welche insbesondere als wieder aufladbare Batteriespeichereinrichtung ausgebildet ist,
- eine zweite Energiespeichereinrichtung (4), welche insbesondere als Doppelschichtkondensatoreinrichtung ausgebildet ist und/oder welche insbesondere schneller auf- und entladbar ist als die erste Energiespeichereinrichtung (3),
- eine Energieversorgungseinheit (1), welche, insbesondere zeitabschnittsweise, Energie zur Aufladung der ersten Energiespeichereinrichtung (3) und/oder der zweiten Energiespeichereinrichtung (4) bereitstellt,
- einen ersten elektrischen Verbraucher (5), insbesondere eine Fahrantriebseinrichtung für die Fahrbewegung des Fahrzeugs oder eine Hubeinrichtung oder eine Handlingseinrichtung,
wobei der erste elektrische Verbraucher (5) über einen Zwischenkreis mit der zweiten Energiespeichereinrichtung (4) verbunden ist,
wobei im Zwischenkreis eine Zwischenkreisspannung (U_{ZK}) herrscht,
wobei die erste Energiespeichereinrichtung (3) über eine bidirektionale Wandlervorrichtung (2) mit der Energieversorgungseinheit (1) verbunden ist,
wobei die zweite Energiespeichereinrichtung (4) mit der Energieversorgungseinheit (1) verbunden ist,
**dadurch gekennzeichnet, dass**
ein erster Leistungsfluss von der ersten Energiespeichereinrichtung (3) zur zweiten Energiespeichereinrichtung (4) stattfindet, wenn die Zwischenkreisspannung (U_{ZK}) unter eine definierbare Spannung (U_{S}) fällt, und
dass ein zweiter Leistungsfluss von der zweiten Energiespeichereinrichtung (4) zur ersten Energiespeichereinrichtung (3) jederzeit verhindert wird.

2. Verfahren nach einem der vorangegangenen Ansprüche,
**dadurch gekennzeichnet, dass**
der Energieversorgungseinheit (1) kontaktbehaftet oder berührungslos Energie zugeführt wird, insbesondere wobei der Energieversorgungseinheit (1) zeitabschnittsweise während der Fahrt Energie zugeführt wird.

3. Verfahren nach einem der vorangegangenen Ansprüche,
**dadurch gekennzeichnet, dass**
die zweite Energiespeichereinrichtung (4) eine Ladeschlussspannung (U_{L}) und eine Entladeschlussspannung (U_{E}) aufweist,
wobei der Wert der definierbaren Spannung (U_{S}) größer als der Wert der Entladeschlussspannung (U_{E}) und kleiner als der Wert der Ladeschlussspannung (U_{L}) ist.

4. Verfahren nach einem der vorangegangenen Ansprüche,
**dadurch gekennzeichnet, dass**
der Wert der definierbaren Spannung (U_{S}) abhängig von der vom ersten elektrischen Verbraucher (5) durchschnittlich benötigten Leistung (P_{V}) ist.

5. Verfahren nach einem der vorangegangenen Ansprüche,
**dadurch gekennzeichnet, dass**
der Wert der definierbaren Spannung (U_{S}) dynamisch während dem Betrieb des Fahrzeugs variiert wird.

6. Verfahren nach einem der vorangegangenen Ansprüche,
**dadurch gekennzeichnet, dass**
der Wert der definierbaren Spannung (U_{S}) gleich dem Quotienten aus der vom ersten elektrischen Verbraucher (5) maximal benötigten Leistung (P_{V,max}) und dem für den ersten elektrischen Verbraucher (5) maximal zulässigen Strom (I_{V,max}) ist.

7. Verfahren nach einem der vorangegangenen Ansprüche,
**dadurch gekennzeichnet, dass**
der zweite Leistungsfluss durch eine zwischen der zweiten Energiespeichereinrichtung (4) und der Wandlervorrichtung (2) angeordnete Diode (6) verhindert wird.

8. Verfahren nach einem der Ansprüche 1 bis 6,
**dadurch gekennzeichnet, dass**
ein Ist-Wert (I_{1,2_ist}) eines zwischen einem ersten Anschlusspunkt (7) und einem zweiten Anschlusspunkt (8) fließenden Umladestroms (I_{1,2}), insbesondere mittels einer Strommesseinrichtung, erfasst wird,
wobei der erste Anschlusspunkt (7) mit der Energieversorgungseinheit (1) und der Wandlervorrichtung (2) verbunden ist,
wobei der zweite Anschlusspunkt (8) mit der zweiten Energiespeichereinrichtung (4) und dem elektrischen Verbraucher (5) verbunden ist,
wobei der zweite Leistungsfluss dadurch verhindert wird, dass die Wandlervorrichtung (2) zumindest für die Aufladung der ersten Energiespeichereinrichtung (3) deaktiviert wird, wenn der erfasste Ist-Wert des Umladestroms (I_{1,2_ist}) einen minimalen Umladestromgrenzwert (I_{1,2_min}), welcher insbesondere nicht negativ ist, unterschreitet.

9. Verfahren nach einem der Ansprüche 1 bis 6,
**dadurch gekennzeichnet, dass**
ein Ist-Wert (I_{1,2_ist}) eines zwischen einem ersten Anschlusspunkt (7) und einem zweiten Anschlusspunkt (8) fließenden Umladestroms (I_{1,2}), insbesondere mittels einer Strommesseinrichtung (12), erfasst wird,
wobei der erste Anschlusspunkt (7) mit der Energieversorgungseinheit (1) und der Wandlervorrichtung (2) verbunden ist,
wobei der zweite Anschlusspunkt (8) mit der zweiten Energiespeichereinrichtung (4) und dem elektrischen Verbraucher (5) verbunden ist,
wobei ein Ist-Wert (U_{ZK_ist}) der Zwischenkreisspannung (U_{ZK}), insbesondere mittels einer Spannungsmessung, erfasst wird,
wobei die Wandlervorrichtung (2) eine Drossel (10), einen Gleichspannungswandler (11) und einen Regler (9) mit einer Kaskadenregelung umfasst,
wobei der zweite Leistungsfluss dadurch verhindert wird, dass die Kaskadenregelung abhängig von den erfassten Ist-Werten des Umladestroms (I_{1,2_ist}) und der Zwischenkreisspannung (U_{ZK_ist}) eine an dem Gleichspannungswandler (11) anliegende Wandlerspannung (U_{W}) derart stellt oder regelt, dass ein negativer Umladestrom (I_{1,2}) verhindert wird.

10. Verfahren nach Anspruch 9,
**dadurch gekennzeichnet, dass**
die Kaskadenregelung einen Stromregler (15) mit überlagertem Spannungsregler (13) und eine zwischen dem Spannungsregler (13) und Stromregler (15) angeordnete Begrenzung (14) umfasst,
wobei die Begrenzung einen Sollwert für den Umladestrom (I_{1,2_soll}) auf Werte begrenzt, welche größer als ein minimaler Umladestromgrenzwert (I_{1,2_min}), welcher insbesondere nicht negativ ist, sind.

11. Verfahren nach einem der vorangegangenen Ansprüche,
**dadurch gekennzeichnet, dass**
der erste Leistungsfluss stattfindet, wenn die Zwischenkreisspannung (U_{ZK}) kleiner als die Ladeschlussspannung (U_{L}) ist und die Spannung in der ersten Energiespeichereinrichtung (3) über einer definierbaren Mindestspannung (Uₘᵢₙ) liegt.

12. Verfahren nach einem der vorangegangenen Ansprüche,
**dadurch gekennzeichnet, dass**
das Fahrzeug neben dem ersten elektrischen Verbraucher (5) weitere elektrische Verbraucher umfasst, wobei alle elektrischen Verbraucher über den Zwischenkreis, insbesondere parallel, mit der zweiten Energiespeichereinrichtung (4) verbunden sind.

13. Elektrisches Fahrzeug, insbesondere fahrerloses, mobiles Assistenzsystem einer intralogistischen Anwendung, insbesondere zur Durchführung eines Verfahrens nach einem der Ansprüche 1 bis 12, aufweisend
- eine erste Energiespeichereinrichtung (3), welche insbesondere als wieder aufladbare Batteriespeichereinrichtung ausgebildet ist,
- eine zweite Energiespeichereinrichtung (4), welche insbesondere als Doppelschichtkondensatoreinrichtung ausgebildet ist und/oder welche insbesondere schneller auf- und entladbar ist als die erste Energiespeichereinrichtung (3),
- eine Energieversorgungseinheit (1), welche, insbesondere zeitabschnittsweise, Energie zur Aufladung der ersten Energiespeichereinrichtung (3) und/oder der zweiten Energiespeichereinrichtung (4) bereitstellt,
- einen ersten elektrischen Verbraucher (5), welcher über einen Zwischenkreis mit der zweiten Energiespeichereinrichtung (4) verbunden ist, wobei im Zwischenkreis eine Zwischenkreisspannung (U_{ZK}) herrscht,
wobei die erste Energiespeichereinrichtung (3) über eine bidirektionale Wandlervorrichtung (2) mit der Energieversorgungseinheit (1) verbunden ist,
wobei die zweite Energiespeichereinrichtung (4) mit der Energieversorgungseinheit (3) verbunden ist,
**dadurch gekennzeichnet, dass**
das Fahrzeug derart ausgestaltet ist, ein erster Leistungsfluss von der ersten Energiespeichereinrichtung (3) zur zweiten Energiespeichereinrichtung (4) stattfindet, wenn die Zwischenkreisspannung (U_{ZK}) unter eine definierbare Spannung (U_{S}) fällt, und
dass ein zweiter Leistungsfluss von der zweiten Energiespeichereinrichtung (4) zur ersten Energiespeichereinrichtung (3) jederzeit verhindert wird.

14. Fahrzeug nach Anspruch 13,
**dadurch gekennzeichnet, dass**
die Energieversorgungseinheit (1) als regelbare Stromquelle ausgebildet ist und/oder die erste Energiespeichereinrichtung (3) derart trennbar am elektrischen Fahrzeug angeordnet ist, dass ein Austausch der ersten Energiespeichereinrichtung (3) ermöglicht ist.

15. Fahrzeug nach einem der Ansprüche 13 bis 14,
**dadurch gekennzeichnet, dass**
an der ersten Energiespeichereinrichtung (3) mittels einer Strommessung und/oder Spannungsmessung ein Überspannungsschutz und/oder Unterspannungsschutz und/oder Überstromschutz bereitgestellt ist und/oder dass
an der ersten Energiespeichereinrichtung (3) mittels einer Temperaturmessung ein Übertemperaturschutz bereitgestellt ist und/oder dass
an der zweiten Energiespeichereinrichtung (4) mittels einer Strommessung und/oder Spannungsmessung ein Überspannungsschutz und/oder Überstromschutz bereitgestellt ist und /oder dass
an der zweiten Energiespeichereinrichtung (4) mittels einer Temperaturmessung ein Übertemperaturschutz bereitgestellt ist.

## Claims

1. Method for operating an electric vehicle, in particular a driverless mobile assistance system of an intralogistics application, comprising
- a first energy storage device (3), which in particular is configured as a rechargeable battery storage device,
- a second energy storage device (4), which in particular is configured as a double-layer capacitor device and/or which in particular can be charged and discharged more rapidly than the first energy storage device (3),
- an energy supply unit (1), which, in particular periodically, provides energy for charging the first energy storage device (3) and/or the second energy storage device (4),
- a first electrical consumer (5), in particular a travel drive device for the travel motion of the vehicle, or a lifting device, or a handling device,
wherein the first electrical consumer (5) is connected to the second energy storage device (4) via a DC link,
wherein a DC link voltage (U_{ZK}) prevails in the DC link,
wherein the first energy storage device (3) is connected to the energy supply unit (1) via a bidirectional converter device (2), wherein the second energy storage device (4) is connected to the energy supply unit (1),
**characterized in that**
a first power flow from the first energy storage device (3) to the second energy storage device (4) takes place when the DC link voltage (U_{ZK}) falls below a definable voltage (U_{S}), and
**in that** a second power flow from the second energy storage device (4) to the first energy storage device (3) is prevented at all times.

2. Method according to any of the preceding claims,
**characterized in that**
energy is supplied to the energy supply unit (1) in a contact-based or contactless manner,
in particular wherein energy is supplied to the energy supply unit (1) periodically during travel.

3. Method according to any of the preceding claims,
**characterized in that**
the second energy storage device (4) has an end-of-charge voltage (U_{L}) and an end-of-discharge voltage (U_{E});
wherein the value of the definable voltage (U_{S}) is greater than the value of the end-of-discharge voltage (U_{E}) and lower than the value of the end-of-charge voltage (U_{L}).

4. Method according to any of the preceding claims,
**characterized in that**
the value of the definable voltage (U_{S}) depends on the average power (P_{V}) required by the first electrical consumer (5).

5. Method according to any of the preceding claims,
**characterized in that**
the value of the definable voltage (U_{S}) is varied dynamically during operation of the vehicle.

6. Method according to any of the preceding claims,
**characterized in that**
the value of the definable voltage (U_{S}) is equal to the quotient of the maximum power (P_{V,max}) required by the first electrical consumer (5) and the maximum permissible current (I_{V,max}) for the first electrical consumer (5).

7. Method according to any of the preceding claims,
**characterized in that**
the second power flow is prevented by a diode (6) arranged between the second energy storage device (4) and the converter device (2).

8. Method according to any of claims 1 to 6,
**characterized in that**
an actual value (I_{1,2_actual}) of a charge transfer current (I_{1,2}) flowing between a first connection point (7) and a second connection point (8) is detected, in particular by means of a current measuring device,
wherein the first connection point (7) is connected to the energy supply unit (1) and the converter device (2),
wherein the second connection point (8) is connected to the second energy storage device (4) and the electrical consumer (5),
wherein the second power flow is prevented **in that** the converter device (2) at least for charging the first energy storage device (3) is deactivated if the detected actual value of the charge transfer current (I_{1,2_actual}) is below a minimum charge transfer current limit value (I_{1,2_min}), which in particular is not negative.

9. Method according to any of claims 1 to 6,
**characterized in that**
an actual value (I_{1,2_actual}) of a charge transfer current (I_{1,2}) flowing between a first connection point (7) and a second connection point (8) is detected, in particular by means of a current measuring device (12),
wherein the first connection point (7) is connected to the energy supply unit (1) and the converter device (2),
wherein the second connection point (8) is connected to the second energy storage device (4) and the electrical consumer (5),
wherein an actual value (U_{ZK_actual}) of the DC link voltage (U_{ZK}) is detected, in particular by means of a voltage measurement, wherein the converter device (2) comprises a choke (10), a DC voltage converter (11), and a controller (9) with cascade control,
wherein the second power flow is prevented **in that** the cascade control sets or controls a converter voltage (U_{W}) present at the DC voltage converter (11) as a function of the detected actual values of the charge transfer current (I_{1,2_actual}) and the DC link voltage (U_{ZK_actual}) such that a negative charge transfer current (I_{1,2}) is prevented.

10. Method according to claim 9,
**characterized in that**
the cascade control comprises a current controller (15) with a superposed voltage controller (13) and a limiter (14) arranged between the voltage controller and the current controller,
wherein the limiter limits a target value for the charge transfer current (I_{1,2_target}) to values greater than a minimum charge transfer current limit value (I_{1,2_min}), which in particular is not negative.

11. Method according to any of the preceding claims,
**characterized in that**
the first power flow takes place when the DC link voltage (U_{ZK}) is lower than the end-of-charge voltage (U_{L}) and the voltage in the first energy storage device (3) is above a definable minimum voltage (Uₘᵢₙ).

12. Method according to any of the preceding claims,
**characterized in that**
the vehicle comprises other electrical consumers in addition to the first electrical consumer (5), wherein all the electrical consumers are connected to the second energy storage device (4) via the DC link, in particular in parallel.

13. Electric vehicle, in particular a driverless mobile assistance system of an intralogistics application, in particular for carrying out a method according to any of claims 1 to 12, comprising
- a first energy storage device (3), which in particular is configured as a rechargeable battery storage device,
- a second energy storage device (4), which in particular is configured as a double-layer capacitor device and/or which in particular can be charged and discharged more rapidly than the first energy storage device (3),
- an energy supply unit (1), which, in particular periodically, provides energy for charging the first energy storage device (3) and/or the second energy storage device (4),
- a first electrical consumer (5), which is connected to the second energy storage device (4) via a DC link, wherein a DC link voltage (U_{ZK}) prevails in the DC link,
wherein the first energy storage device (3) is connected to the energy supply unit (1) via a bidirectional converter device (2), wherein the second energy storage device (4) is connected to the energy supply unit (3),
**characterized in that**
the vehicle is configured such that a first power flow from the first energy storage device (3) to the second energy storage device (4) takes place when the DC link voltage (U_{ZK}) falls below a definable voltage (U_{S}), and
such that a second power flow from the second energy storage device (4) to the first energy storage device (3) is prevented at all times.

14. Vehicle according to claim 13,
**characterized in that**
the energy supply unit (1) is configured as a controllable current source, and/or
the first energy storage device (3) is detachably arranged on the electric vehicle such that replacement of the first energy storage device (3) is possible.

15. Vehicle according to any of claims 13 to 14,
**characterized in that**
an overvoltage protection and/or an undervoltage protection and/or an overcurrent protection is provided on the first energy storage device (3) by means of a current measurement and/or voltage measurement, and/or **in that**
an overtemperature protection is provided on the first energy storage device (3) by means of a temperature measurement, and/or in that
an overvoltage protection and/or an overcurrent protection is provided on the second energy storage device (4) by means of a current measurement and/or voltage measurement, and/or **in that** an overtemperature protection is provided on the second energy storage device (4) by means of a temperature measurement.

## Revendications

1. Procédé pour exploiter un véhicule électrique, en particulier un système d'assistance mobile sans conducteur d'une application intralogistique, comprenant
- un premier dispositif de stockage d'énergie (3), qui est en particulier conçu comme dispositif de stockage par batterie rechargeable,
- un second dispositif de stockage d'énergie (4), qui est en particulier conçu comme dispositif de condensateur à double couche et/ou qui est en particulier plus rapidement rechargeable et déchargeable que le premier dispositif de stockage d'énergie (3),
- une unité d'alimentation en énergie (1), qui fournit, en particulier par intervalles de temps, de l'énergie pour la recharge du premier dispositif de stockage d'énergie (3) et/ou du second dispositif de stockage d'énergie (4),
- un premier consommateur électrique (5), en particulier un dispositif d'entraînement de déplacement pour le mouvement du véhicule ou un dispositif de levage ou un dispositif de manutention,
où le premier consommateur électrique (5) est relié au second dispositif de stockage d'énergie (4) via un circuit intermédiaire,
où une tension du circuit intermédiaire (U_{ZK}) règne dans le circuit intermédiaire,
où le premier dispositif de stockage d'énergie (3) est relié à l'unité d'alimentation en énergie (1) via un dispositif convertisseur bidirectionnel (2),
où le second dispositif de stockage d'énergie (4) est relié à l'unité d'alimentation en énergie (1), **caractérisé en ce que**
un premier flux de puissance du premier dispositif de stockage d'énergie (3) vers le second dispositif de stockage d'énergie (4) a lieu lorsque la tension du circuit intermédiaire (U_{ZK}) chute sous une tension définissable (U_{S}) et
qu'un second flux de puissance du second dispositif de stockage d'énergie (4) vers le premier dispositif de stockage d'énergie (3) est empêché à tout moment.

2. Procédé selon l'une des revendications précédentes, **caractérisé en ce que** l'unité d'alimentation en énergie (1) reçoit de l'énergie avec contact ou sans contact, en particulier où l'unité d'alimentation en énergie (1) reçoit de l'énergie par intervalles de temps pendant le déplacement du véhicule.

3. Procédé selon l'une des revendications précédentes, **caractérisé en ce que** le second dispositif de stockage d'énergie (4) comporte une tension de fin de charge (U_{L}) et une tension de fin de décharge (U_{E});
où la valeur de la tension définissable (U_{S}) est supérieure à la valeur de la tension de fin de décharge (U_{E}) et inférieure à la valeur de la tension de fin de charge (U_{L}).

4. Procédé selon l'une des revendications précédentes, **caractérisé en ce que** la valeur de la tension définissable (U_{S}) dépend de la puissance maximale requise en moyenne par le premier consommateur électrique (5) (P_{V}).

5. Procédé selon l'une des revendications précédentes, **caractérisé en ce que** la valeur de la tension définissable (U_{S}) est variée dynamiquement pendant l'exploitation du véhicule.

6. Procédé selon l'une des revendications précédentes, **caractérisé en ce que** la valeur de la tension définissable (U_{S}) est égale au quotient de la puissance maximale requise par le premier consommateur électrique (5) (P_{V,max}) et du courant maximal admissible pour le premier consommateur électrique (5) (I_{V,max}).

7. Procédé selon l'une des revendications précédentes, **caractérisé en ce que** le second flux de puissance est empêché par une diode (6) disposée entre le second dispositif de stockage d'énergie (4) et le dispositif convertisseur bidirectionnel (2).

8. Procédé selon l'une des revendications 1 à 6, **caractérisé en ce que**
une valeur réelle (I_{1,2_ist}) d'un courant de transfert (I_{1,2}) circulant entre un premier point de connexion (7) et un second point de connexion (8), en particulier au moyen d'un dispositif de mesure de courant, est détectée,
où le premier point de connexion (7) est relié à l'unité d'alimentation en énergie (1) et au dispositif convertisseur bidirectionnel (2),
où le second point de connexion (8) est relié au second dispositif de stockage d'énergie (4) et au consommateur électrique (5),
où le second flux de puissance est empêché **en ce que** le dispositif convertisseur bidirectionnel (2) est désactivé au moins pour la recharge du premier dispositif de stockage d'énergie (3) lorsque la valeur réelle détectée du courant de transfert (I_{1,2_ist}) est inférieure à une valeur limite minimale du courant de transfert (I_{1,2_min}) qui est en particulier non négative.

9. Procédé selon l'une des revendications 1 à 6, **caractérisé en ce que**
une valeur réelle (I_{1,2_ist}) d'un courant de transfert (I_{1,2}) circulant entre un premier point de connexion (7) et un second point de connexion (8), en particulier au moyen d'un dispositif de mesure de courant (12), est détectée,
où le premier point de connexion (7) est relié à l'unité d'alimentation en énergie (1) et au dispositif convertisseur bidirectionnel (2),
où le second point de connexion (8) est relié au second dispositif de stockage d'énergie (4) et au consommateur électrique (5),
où une valeur réelle (U_{ZK_ist}) de la tension du circuit intermédiaire (U_{ZK}), en particulier au moyen d'une mesure de tension, est détectée,
où le dispositif convertisseur bidirectionnel (2) comprend une inductance (10), un convertisseur à courant continu (11) et un régulateur (9) avec une régulation en cascade,
où le second flux de puissance est empêché **en ce que** la régulation en cascade, en fonction des valeurs réelles détectées du courant de transfert (I_{1,2_ist}) et de la tension du circuit intermédiaire (U_{ZK_ist}) fournit ou régule une tension de convertisseur (U_{W}) appliquée au convertisseur à courant continu (11) de telle sorte qu'un courant de transfert négatif (I_{1,2}) est empêché.

10. Procédé selon la revendication 9, **caractérisé en ce que** la régulation en cascade comprend un régulateur de courant (15) avec un régulateur de tension (13) superposé et une limitation (14) disposée entre le régulateur de tension (13) et le régulateur de courant (15),
où la limitation limite une valeur de consigne pour le courant de transfert (I_{1,2_soll}) à des valeurs qui sont supérieures à une valeur limite minimale du courant de transfert (I_{1,2_min}) qui est en particulier non négative.

11. Procédé selon l'une des revendications précédentes, **caractérisé en ce que** le premier flux de puissance a lieu lorsque la tension du circuit intermédiaire (U_{ZK}) est inférieure à la tension de fin de charge (U_{L}) et que la tension dans le premier dispositif de stockage d'énergie (3) est supérieure à une tension minimale définissable (Uₘᵢₙ).

12. Procédé selon l'une des revendications précédentes, **caractérisé en ce que** le véhicule comprend, outre le premier consommateur électrique (5), d'autres consommateurs électriques, où tous les consommateurs électriques sont reliés au second dispositif de stockage d'énergie (4) via le circuit intermédiaire, en particulier en parallèle.

13. Véhicule électrique, en particulier système d'assistance mobile sans conducteur d'une application intralogistique, en particulier pour la mise en œuvre d'un procédé selon l'une des revendications 1 à 12, comprenant
- un premier dispositif de stockage d'énergie (3), qui est en particulier conçu comme dispositif de stockage par batterie rechargeable, -
un second dispositif de stockage d'énergie (4), qui est en particulier conçu comme dispositif de condensateur à double couche et/ou qui est en particulier plus rapidement rechargeable et déchargeable que le premier dispositif de stockage d'énergie (3),
- une unité d'alimentation en énergie (1), qui fournit, en particulier par intervalles de temps, de l'énergie pour la recharge du premier dispositif de stockage d'énergie (3) et/ou du second dispositif de stockage d'énergie (4),
- un premier consommateur électrique (5), qui est relié au second dispositif de stockage d'énergie (4) via un circuit intermédiaire, où une tension du circuit intermédiaire (U_{ZK}) règne dans le circuit intermédiaire,
où le premier dispositif de stockage d'énergie (3) est relié à l'unité d'alimentation en énergie (1) via un dispositif convertisseur bidirectionnel (2),
où le second dispositif de stockage d'énergie (4) est relié à l'unité d'alimentation en énergie (3), **caractérisé en ce que**
le véhicule est conçu de telle sorte qu'un premier flux de puissance du premier dispositif de stockage d'énergie (3) vers le second dispositif de stockage d'énergie (4) a lieu lorsque la tension du circuit intermédiaire (U_{ZK}) chute sous une tension définissable (U_{S}), et
qu'un second flux de puissance du second dispositif de stockage d'énergie (4) vers le premier dispositif de stockage d'énergie (3) est empêché à tout moment.

14. Véhicule selon la revendication 13, **caractérisé en ce que**
l'unité d'alimentation en énergie (1) est conçue comme source de courant réglable et/ou le premier dispositif de stockage d'énergie (3) est disposé de manière amovible sur le véhicule électrique de sorte qu'un échange du premier dispositif de stockage d'énergie (3) est permis.

15. Véhicule selon l'une des revendications 13 à 14, **caractérisé en ce que**
sur le premier dispositif de stockage d'énergie (3), une protection contre les surtensions et/ou une protection contre les sous-tensions et/ou une protection contre les surintensités est fournie au moyen d'une mesure de courant et/ou d'une mesure de tension et/ou que
sur le premier dispositif de stockage d'énergie (3), une protection contre les surchauffes est fournie au moyen d'une mesure de température et/ou que
sur le second dispositif de stockage d'énergie (4), une protection contre les surtensions et/ou une protection contre les surintensités est fournie au moyen d'une mesure de courant et/ou d'une mesure de tension et/ou que
sur le second dispositif de stockage d'énergie (4), une protection contre les surchauffes est fournie au moyen d'une mesure de température.
